# EUROPEAN PATENT APPLICATION

(11) **EP 4 668 447 A1**
(43) Date of publication of application: **24.12.2025**
(21) Application number: 24764151.7
(22) Date of filing: 26.02.2024
(51) Int. Cl.: H01M 50/30, H01M 50/367, H01M 10/6554

(54) **VENTING DEVICE AND BATTERY PACKAGE COMPRISING SAME**

(30) Priority: 27.02.2023 KR 20230026259
(71) Applicant: LG Energy Solution, Ltd., Seoul 07335 (KR)
(72) Inventor: PARK, Jeong Gi, Daejeon 34122 (KR); KIM, Soo Han, Daejeon 34122 (KR); AHN, Moon Youl, Daejeon 34122 (KR); KIM, Jae Wook, Daejeon 34122 (KR); KONG, Seungjin, Daejeon 34122 (KR)
(74) Representative: Plasseraud IP
(86) International application number: PCT/KR2024/002459
(87) International publication number: WO 2024/181752

(57) **Abstract**

A ventilation device and a battery package including the same are disclosed. The ventilation device according to the present invention includes: a deflector covering the through-hole part in a flowing direction to change a direction of travel of the exhaust gas; a cooling plate provided with a through-hole part where the exhaust gas to pass through and dissipating heat of the exhaust gas; and a ventilation filter installed at the through-hole part of the cooling plate to filter the exhaust gas deflected by the deflector;

## Description

### [TECHNICAL FIELD]

This application claims the benefit of priority based on Korean Patent Application No. 10-2023-0026259 filed on February 27, 2023, entire content disclosed in the document of the patent applications is included as a part of this specification.

The present invention relates to a ventilation device and a battery package including the same capable of preventing exhaust gas generated during an ignition of a battery module from directly colliding with a ventilation filter, and dust particles larger than a pitch of a mesh of a ventilation filter from being exhausted, and of reducing the possibility of ignition.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-type secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these secondary batteries is approximately 2.5V to 4.2V. When a higher output voltage is required, a battery module is constituted by connecting multiple secondary batteries in series, and a battery pack is constituted by connecting multiple battery modules. In addition, a battery pack is constituted by connecting multiple secondary batteries in parallel according to the charge and discharge capacity required for the battery pack. Accordingly, the number of secondary batteries and the electrical connection structure of the battery pack may be selected in various ways according to the required output voltage or charge and discharge capacity.

It is important that dissipation of the heat generated from each battery module is facilitated in a battery pack including multiple battery modules. In some cases, the heat generated during the charge and discharge process of the battery pack is not effectively dissipated. In such case, the battery module may be degraded as heat is accumulated in the battery module. When the degradation of the battery module is accelerated, the battery module may catch fire or explode. Accordingly, the high-power, large-capacity battery pack is installed with a cooling device for cooling each battery module and a safety device.

When a thermal runaway phenomenon occurs inside a battery module, a large amount of flammable exhaust gas is generated. Since the battery package accommodating the battery module has a structure sealed from the outside, the inside of the battery package hardly ignite due to insufficient oxygen.

When flammable exhaust gas inside the battery package is exhausted to the outside, high-temperature dust may come into contact with air. Here, when the dust contained in the high-temperature exhaust gas is larger than a certain size, the dust may act as an ignition point. In order to reduce the particle size of the dust contained in the exhaust gas, a filter is installed in the ventilation device, and the mesh of the filter is designed to be small in order to reduce the particle size of the dust exhausted to the outside.

However, since a large amount of exhaust gas is exhausted to the outside through the narrow exhaust port of the ventilation device, the flow rate and pressure of the exhaust gas are significantly increased. When the high-speed and high-pressure exhaust gas collides with the filter, the mesh of the filter is expanded, and large dust particles pass through the filter and are exhausted to the outside. Accordingly, the possibility of ignition of the battery package may increase.

The background art of the present invention is disclosed in Korean Patent Application Publication No. 2022-0056024 (published on May 4, 2022, titled Pack Housing With Integrated Filter Mesh Applied To Venting Hole And Battery Pack Including Same).

### [DETAILED DESCRIPTION OF THE INVENTION]

### [TECHNICAL PROBLEM]

In order to solve the above-described problems, it is an object of the present invention to provide a ventilation device and a battery package including the same capable of preventing dust of a flammable size in among flammable dust in the exhaust gas from being exhausted.

It is an object of the present invention to provide a ventilation device and a battery package including the same capable of preventing dust of a certain size or larger among flammable dust from acting as an ignition point when coming into contact with the outside air.

It is an object of the present invention to provide a ventilation device and a battery package including the same capable of significantly reducing the pressure of exhaust gas applied to a ventilation filter.

It is an object of the present invention to provide a ventilation device and a battery package including the same capable of preventing a ventilation filter from being deformed or damaged by the pressure of exhaust gas.

It is an object of the present invention to provide a ventilation device and a battery package including the same capable of suppressing ignition of dust outside a battery package and preventing fire from occurring.

It is an object of the present invention to provide a ventilation device and a battery package including the same capable of improving heat dissipation performance by transmitting thermal energy of exhaust gas to a case through a cooling body.

It is an object of the present invention to provide a ventilation device and a battery package including the same.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a ventilation device installed in a battery pack to filter an exhaust gas of the battery pack, and a battery package with the ventilation device installed.

A ventilation device according to the present invention includes: a plate provided with through-hole part for an exhaust gas to pass through; a deflector spaced apart from the through-hole part in a direction opposite to a flowing direction of the exhaust gas to cover the through-hole part in the flowing direction; and a ventilation filter installed at the through-hole part of the plate to filter the exhaust gas passing through the through-hole part.

The plate may include a cooling plate dissipating heat of the exhaust gas passing through the through-hole part.

The deflector may include: a deflection panel screening the through-hole part; and a frame supporting the deflection panel such that the deflection panel is spaced from the plate.

The deflection panel may be arranged to face the through-hole part of the plate.

The edges of the deflection panel and the cooling plate are spaced apart in the flowing direction.

The frame may connect the deflection panel and the plate.

The frame may define a detour space between the deflection panel and the plate.

The frame may include: a front frame where the deflection panel is installed; a rear frame facing and spaced apart from the front frame; and a connecting frame connecting the front frame and the rear frame.

The connecting frame may extend from the front frame toward the plate.

The rear frame may be fixed to the plate.

A plurality of connecting frames may be disposed to be spaced apart from one another along the circumferential direction of the deflection panel.

Accordingly, a detour space may be provided between the front frame and the plate.

The plate may include a body where the through-hole part is provided, and a step thinner than the body provided at the periphery thereof.

The through-hole part of the plate may be arranged in grid.

The ventilation filter may include: a first ventilation filter arranged inner than the through-hole part in the flowing direction; and a second ventilation filter arranged outer than the through-hole part in the flowing direction.

The deflector, ventilation filter and plate may be arranged to be aligned with one another along the flowing direction.

A ventilation device according to the present invention includes: a deflector covering the through-hole part in a flowing direction to change a direction of travel of the exhaust gas; a cooling plate provided with a through-hole part where the exhaust gas to pass through and dissipating heat of the exhaust gas; and a ventilation filter installed at the through-hole part of the cooling plate to filter the exhaust gas deflected by the deflector.

The deflector may include: a deflection panel screening the through-hole part; and a frame connecting the deflection panel and the cooling plate and providing a detour space between the deflection panel and the cooling plate

The deflection panel may be arranged to face the through-hole part of the cooling plate.

The deflection panel may deflect the exhaust gas toward the periphery of the frame.

The frame may include: a front frame where the deflection panel may be installed; a plurality of connecting frames extending from the front frame toward the cooling plate and defining the detour space between the cooling plate and the deflection panel; and a rear frame connected to the plurality of connecting frames and installed at the cooling plate to face the front frame.

The cooling plate may include: a cooling body where the through-hole part may be provided; and a thermal conduction promoter provided at and thinner than a periphery of the cooling body.

The through-hole part of the cooling plate may be arranged in grid.

The ventilation filter may include: a first ventilation filter arranged inner than the through-hole part in a flowing direction; and a second ventilation filter arranged outer than the through-hole part in the flowing direction.

The deflector, ventilation filter, and cooling plate may be arranged in a straight line.

The deflector, the ventilation filter and the cooling plate may be arranged to be aligned with one another in a straight line.

A battery package according to the present invention includes: one or more battery modules disposed inside a case; at least one inner filter arranged to screen an exterior of the battery module to primarily filter an exhaust gas generated during an ignition of the one or more battery modules; and a ventilation device deflecting the exhaust gas filtered by the at least one inner filter and including a mesh secondarily filtering dust of a flammable size in the exhaust gas filtered by the at least one inner filter.

The ventilation device may include: a deflector facing the at least one inner filter and deflecting the exhaust gas to change a direction of travel of the exhaust gas; a cooling plate provided with a through-hole part where the exhaust gas to pass through and dissipating heat of the exhaust gas; and a ventilation filter installed at the through-hole part of the cooling plate to filter the exhaust gas deflected by the deflector.

The one or more inner filter may be disposed at each of two widthwise ends of the one or more battery modules, and the ventilation device may be coupled to both sides of the case opposite to the one or more inner filter.

Two or more ventilation devices may be installed at each side of the case.

The deflector includes: a deflection panel installed between the one or more inner filter and the cooling plate to deflect the exhaust gas; and a frame connecting the deflection panel and the cooling plate and defining a detour space between the deflection panel and the cooling plate.

The deflection panel may be arranged to face the through-hole part of the cooling plate.

The deflection panel may deflect the exhaust gas toward the periphery of the frame.

The frame may include: a front frame where the deflection panel may be installed; a plurality of connecting frames extending from the front frame toward the cooling plate and defining the detour space between the cooling plate and the deflection panel; and a rear frame connected to the plurality of connecting frames and installed at the cooling plate to face the front frame.

The cooling plate may include: a cooling body where the through-hole part may be provided; and a thermal conduction promoter having a periphery thinner than the cooling body and coupled to and in surface contact with the case.

The through-hole part of the cooling plate may be arranged in grid.

The ventilation filter may include: a first ventilation filter arranged inner than the through-hole part in a flowing direction; and a second ventilation filter arranged outer than the through-hole part in the flowing direction.

The deflector, the ventilation filter and the cooling plate may be arranged in a straight line.

### [ADVANTAGEOUS EFFECTS]

According to the present invention, the ventilation device blocks and deflects the exhaust gas filtered by the inner filter, and secondarily filters dust of a flammable size in the exhaust gas filtered by the inner filter. Accordingly, dust of a flammable size among the flammable dust contained in the exhaust gas may be prevented from being exhausted. Furthermore, dust of a certain size or larger among the flammable dust may be prevented from acting as an ignition point when coming into contact with the outside air.

According to the present invention, since the exhaust gas reaches the ventilation filter after being deflected by the deflector, the pressure of the exhaust gas applied to the ventilation filter may be significantly reduced.

According to the present invention, the pressure of the exhaust gas may be significantly reduced, thereby preventing the mesh of the ventilation filter from being expanded by the pressure of the exhaust gas. Accordingly, dust of particles larger than the pitch of the mesh of the ventilation filter may be prevented from being exhausted through the ventilation filter.

According to the present invention, since dust of a flammable size is filtered by a ventilation filter, ignition of dust outside the battery package may be suppressed, thereby preventing fire from occurring.

According to the present invention, since the thermal contact area between the cooling plate and the case increases, heat dissipation performance may be improved due to the thermal energy of the exhaust gas being transmitted to the case through the cooling body.

According to the present invention, since the cooling plate reduces the temperature of the exhausted dust to below the ignition temperature, ignition of dust outside the battery package may be prevented.

In addition to the advantageous effects described above, specific effects of the present invention will be described further while describing specific details of the present invention.

### [BRIEF DESCRIPTION OF DRAWINGS]

FIG. 1 is a perspective view schematically illustrating an internal structure of a battery package according to the present invention.
FIG. 2 is a perspective view schematically illustrating an inner filter and a ventilation device of the battery package of FIG. 1.
FIG. 3 is an exploded perspective view schematically illustrating the ventilation device of FIG. 2.
FIG. 4 is a perspective view schematically illustrating a flowing direction of an exhaust gas deflected in the ventilation device of FIG. 2.
FIG. 5 is a perspective view schematically illustrating an exhaust gas exhausted to the outside in the ventilation device of FIG. 2.

### [DESCRIPTION OF REFERENCE NUMERALS]

| | | | |
|---|---|---|---|
| 1: | battery package | 10: | case |
| 11: | heat dissipation step | 20: | battery module |
| 30: | inner filter | 31: | filter frame |
| 33: | pre-filter | 100: | ventilation device |
| 110: | deflector | 111: | deflection panel |
| 113: | frame | 114: | front frame |
| 115: | connecting frame | 116: | rear frame |
| 118: | detour space | 120: | cooling plate |
| 121: | cooling body | 122: | through-hole part |
| 123: | side portion | 124: | thermal conduction promoter |
| 130: | ventilation filter | 131: | first ventilation filter |
| 132: | second ventilation filter | | |

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery package according to an embodiment of the present invention will be described.

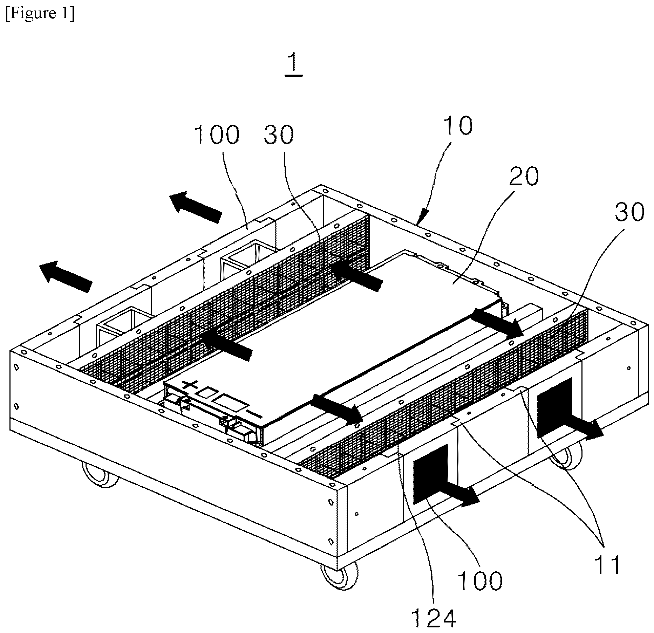

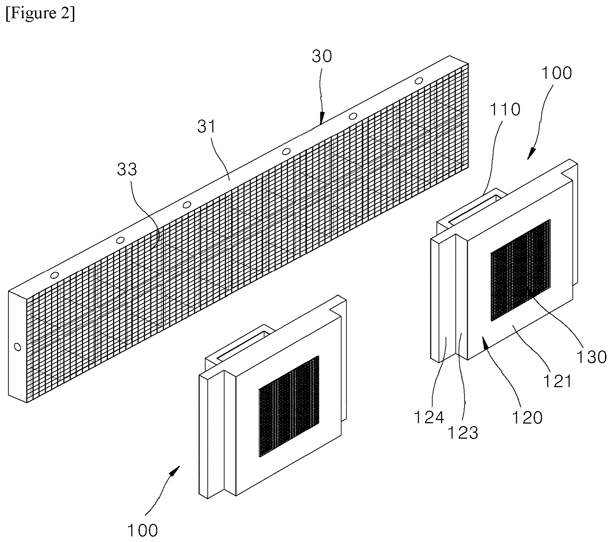

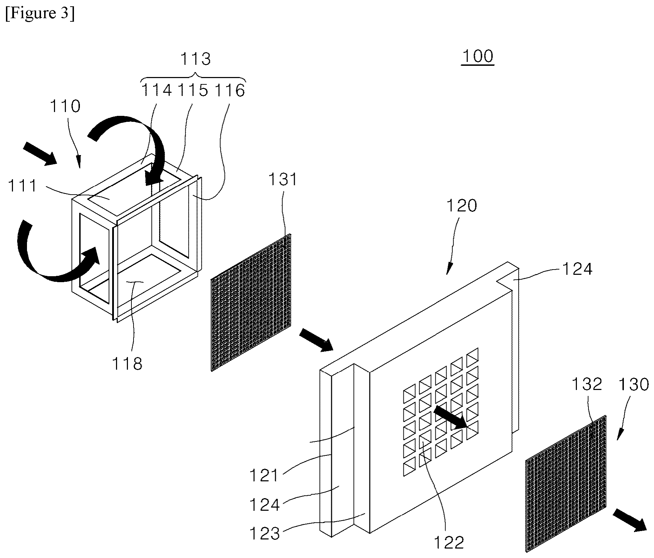

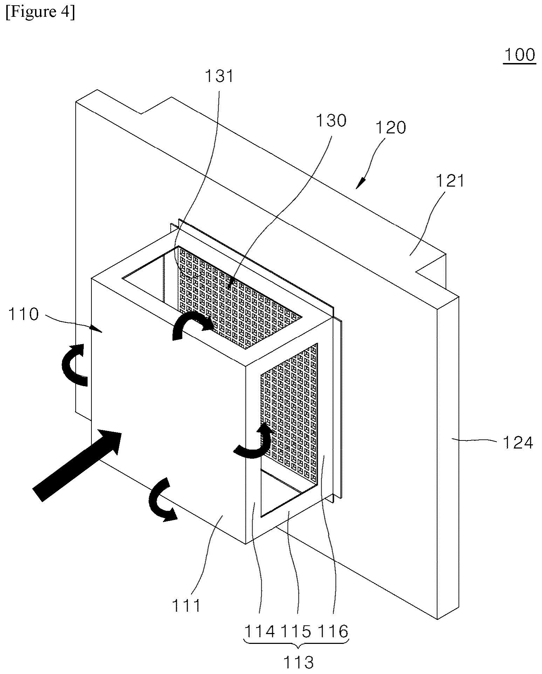

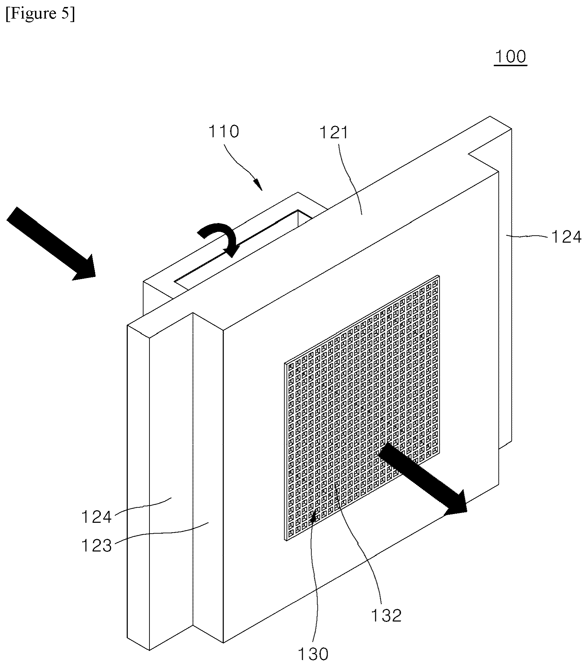

FIG. 1 is a perspective view schematically illustrating an internal structure of a battery package according to the present invention, FIG. 2 is a perspective view schematically illustrating an inner filter and a ventilation device of the battery package of FIG. 1, FIG. 3 is an exploded perspective view schematically illustrating the ventilation device of FIG. 2, FIG. 4 is a perspective view schematically illustrating a flowing direction of an exhaust gas deflected in the ventilation device of FIG. 2, and FIG. 5 is a perspective view schematically illustrating an exhaust gas exhausted to the outside in the ventilation device of FIG. 2.

Referring to FIGS. 1 to 5, a battery package 1 according to an embodiment of the present invention includes a battery module 20, an inner filter 30 and a ventilation device 100.

The battery package 1 includes a case 10. The case 10 may be manufactured from a thermally conductive material to radiate internal thermal energy to the outside. In one example, the case 10 may have a rectangular hexahedron shape. However, the shape of the case 10 is not limited thereto.

At least one battery module 20 is installed inside the case 10. Each battery module 20 is accommodated in the inner space of the case 10. A plurality of battery cells (not shown) are stacked inside the battery module 20. Here, the battery cell may be any one of a pouch-type battery cell, a cylindrical battery cell and a prismatic battery cell. The battery module 20 may be manufactured in various sizes and shapes.

At least one ventilation device 100 is installed in the case 10. The gas and dust generated by the ignition of the battery module 20 move from the inner space of the case 10 where the battery module 20 is installed toward the ventilation device 100. Although not shown, the battery package 1 may further include a structure that guides the flow of gas and dust generated from the battery module 20 during thermal runaway.

An inner filter 30 is installed on the exhaust path of gas and dust from the space where the battery module 20 is installed to the ventilation device 100. The inner filter 30 is arranged to block the exhaust path of gas and dust generated from the battery module 20. For example, as shown in FIG. 1, the inner filter 30 is arranged to block from the outside of the battery module 20. The inner filter 30 may be installed to block the entire flow cross-sections of the exhaust path of the gas and dust such that the gas and dust does not deflect.

At least one inner filter 30 is installed along the exhaust path of gas and dust to primarily filtering of exhaust gas generated when the battery module 20 ignites. When two or more inner filters 30 are installed on the exhaust path of gas and dust, the two or more inner filters 30 may be installed to be spaced apart from each other along the path.

When there are different exhaust paths, the inner filter 30 may be installed for each exhaust path. In the embodiment illustrated in FIG. 1, exhaust paths for gas and dust are provided at two widthwise ends of the battery module 20, respectively. Accordingly, in the embodiment, a pair of inner filters 30 are installed inside the case 10 to partition the two widthwise ends of the battery module 20, respectively.

The inner filter 30 filters relatively large particles among the flammable dust contained in the exhaust gas. A pre-filter that allows the exhaust gas to pass quickly while primarily filtering particles larger than a first size may be employed as the inner filter 30. The inner filter 30 includes a filter frame 31 having a plurality of connecting holes therein, and a pre-filter 33 fixed to two opposite surfaces of the filter frame 31. The filter frame 31 partitions the two widthwise ends of the battery module 20. In addition, the filter frame 31 supports the pre-filter 33 such that the pre-filter 33 is not deformed or damaged by exhaust gas generated when the battery module 20 ignites. The pre-filter 33 filters flammable dust passing through the plurality of connecting holes.

The ventilation device 100 blocks and diverts exhaust gas with particles larger than the first size filtered out by the inner filter 30, and secondarily filters ignitable dust in the exhaust gas filtered by the inner filter 30 that is larger than a second size. The second size is smaller than the first size. The ventilation device 100 filters flammable dust contained in the exhaust gas so as to prevent the flammable dust from being exhausted. A high-temperature dust larger than a certain size among the flammable dust and exhausted through the ventilation device 100 may act as an ignition point when coming into contact with the outside air. However, since the ventilation device 100 secondary filters flammable dust contained in the exhaust gas, ignition may be prevented even when small-sized dust contained in the exhaust gas is exhausted to the outside.

The ventilation device 100 includes a deflector 110, a cooling plate 120 and a ventilation filter 130.

The deflector 110 is spaced apart from the inner filter 30 on the exhaust path of the exhaust gas. In addition, the deflector 110 is spaced apart from the ventilation filter 130. The deflector 110 is disposed to face the ventilation filter 130. The area of the deflector 110 may be equal to or slightly larger than that of the ventilation filter 130.

Without the deflector 110, the exhaust gas passing through the inner filter 30 quickly flows in a straight line toward the ventilation filter 130 and reaches the ventilation filter 130. However, when the deflector 110 is installed as described above, the exhaust gas flowing toward the ventilation filter 130 collides with the deflector 110 and the flow speed is significantly reduced. As the flow speed of the exhaust gas is reduced, the relatively heavy dust among the dusts in the exhaust gas falls due to gravity.

The deflector 110 blocks the exhaust gas flowing quickly from the inner filter 30 toward the ventilation filter 130 in the shortest distance, thereby changing the direction of the exhaust gas. The deflector 110 is arranged opposite to the cooling plate 120. The deflector 110 is spaced apart from the cooling plate 120 to form a detour space 118 in which the deflected exhaust gas flows. The velocity vector of the exhaust gas flowing through the detour space 118 is significantly different from the direction of the normal of the surface of the cooling plate 120.

The cooling plate 120 includes through-hole part 122 that allows exhaust gas to pass through, and quickly dissipates heat by absorbing heat from the exhaust gas. The cooling plate 120 is installed so as to be in surface contact with the case 10 made of thermally conductive material. Accordingly, the temperature is lowered by thermal contact with the cooling plate 120 while the exhaust gas passes through the through-hole part 122.

Meanwhile, for lithium ion batteries and lithium polymer batteries, it was experimentally found that dust generated during ignition of the batteries ignites at approximately 400°C or higher. However, according to the present invention, since the cooling plate 120 reduces the temperature of the exhausted dust to approximately 350-380°C, ignition of the dust may be prevented as the dust is cooled below the ignition temperature.

The ventilation filter 130 is installed on the through-hole part 122 of the cooling plate 120 to filter the exhaust gas deflected by the deflector 110. The through-hole part 122 includes a plurality of through-holes. The through-holes of the through-hole part 122 may be square or circular at the center portion of the deflection panel 111. The filter surface of the ventilation filter 130 is arranged to block the through-hole part 122.

According to the embodiment, since the exhaust gas reaches the ventilation filter 130 after being deflected by the deflector 110, the pressure of the exhaust gas applied to the ventilation filter 130 may be significantly reduced. In addition, by significantly reducing the pressure of the exhaust gas, the mesh of the ventilation filter 130 may be prevented from being expanded by the pressure of the exhaust gas. Accordingly, dust particles larger than the pitch of the mesh of the ventilation filter 130 may be prevented from passing through the ventilation filter 130.

In addition, the mesh of the ventilation filter 130 has a size capable of filtering dust of approximately 1 mm or larger. Generally, when the particle size of dust is approximately 1 mm or larger, the possibility of ignition is high. In contrast, the ventilation filter 130 of the present invention filters dust of 1 mm or larger that may ignite such that dust may be prevented from igniting outside the battery package 1.

The inner filter 30 may be arranged at each of the two widthwise ends of the battery module 20. The inner filter 30 may have a rectangular plate shape to partition the space between the ventilation device 100 and the case 10.

The ventilation device 100 may be coupled to both sides of the case 10 so as to face the inner filter 30. At least two ventilation devices 100 may be installed facing the inner filter 30. Accordingly, gas and dust generated during the ignition of the battery module 20 may be exhausted to both sides of the case 10.

The deflector 110 includes a deflection panel 111 and a frame 113.

The deflection panel 111 is installed between the inner filter 30 and the cooling plate 120 to screen the exhaust gas. The deflection panel 111 may be square. The deflection panel 111 is arranged to face the through-hole part 122 of the cooling plate 120. The deflection panel 111 is arranged away from the portion of the through-hole part 122 where gas flows into, and is larger than the through-hole part 122 to screen the portion of the through-hole part 122 where gas flows into.

The frame 113 connects the deflection panel 111 and the cooling plate 120, and defines the detour space 118 between the deflection panel 111 and the cooling plate 120. The frame 113 separates the deflection panel 111 from the cooling plate 120 by a certain distance.

As the exhaust gas primarily filtered in the inner filter 30 collides with the deflection panel 111, relatively large dust falls to the lower portion of the deflection panel 111. Accordingly, the dust diverted by the deflection panel 111 to reach the ventilation filter 130 may be prevented from blocking the mesh of the ventilation filter 130, and the internal pressure of the exhaust gas may be prevented from increasing.

In addition, the pressure decreases as the exhaust gas collides and is diverted toward the periphery side of the deflection panel 111, and the pressure even further decreases as the exhaust gas flows into the detour space between the deflection panel 111 and the cooling plate 120. Here, since the exhaust gas passes through the ventilation filter 130 after the decrease in the pressure, the ventilation filter 130 may be prevented from being damaged or deformed by the flow pressure of the exhaust gas. In addition, since the pressure applied to the ventilation filter 130 decreases, dust particles larger than the pitch of the mesh of the ventilation filter 130 may be prevented from passing through the ventilation filter 130. Accordingly, since the dust of flammable size is filtered by the ventilation filter 130, a fire may be prevented from occurring outside the battery package 1.

The frame 113 includes a front frame 114, a plurality of connecting frames 115 and a rear frame 116.

The front frame 114 is connected to the deflection panel 111. The front frame 114 may be square or circular. The front frame 114 may be welded to the deflection panel 111 or may be fixed by a separate fastening member.

The plurality of connecting frames 115 extend from the front frame 114 toward the cooling plate 120 and define a detour space 118 between the front frame 114 and the deflection panel 111. The plurality of connecting frames 115 are arranged perpendicular to the deflection panel 111. The plurality of connecting frames 115 may be formed integrally with the front frame 114. In addition, the plurality of connecting frames 115 may be connected to the front frame 114 by welding or fastening members.

The rear frame 116 is connected to a plurality of connecting frames 115, faces the front frame 114, and is installed at the cooling plate 120. The rear frame 116 may be fixed to the cooling plate 120 by welding or fastening members. The rear frame 116 may be square or circular.

The front frame 114 and the rear frame 116 may be larger than the through-hole part 122. Accordingly, the exhaust gas may be diverted to flow into the through-hole part 122 after colliding with the deflection panel 111. In addition, the length of the bypass path of the exhaust gas may be increased.

The frame 113 is made entirely of a thermally conductive material such that the thermal energy of the frame 113 may be transferred to the cooling plate 120. Accordingly, the heat dissipation performance of the battery package 1 may be improved.

The cooling plate 120 may include a cooling body 121 and a thermal conduction promoter 124.

Through-hole part 122 is provided in the cooling body 121. The overall shape of the cooling body 121 is a square plate. The cooling body 121 may be made of a metal material such as aluminum or stainless steel having excellent thermal conductivity. The thickness of the cooling body 121 may be is the same as or almost the same as that of the case 10 so as to exchange heat with the exhaust gas.

Thermal conduction promoter 124 provided at the periphery of the cooling body 121 is thinner than the cooling body 121. There may be a step between the thermal conduction promoter 124 and the cooling body 121. Here, an installation hole (not shown) is provided at both sides of the case 10 for installing the cooling plate 120. A heat dissipation step 11 is provided at both sides of the installation hole. When the cooling body 121 is installed in the installation hole, the thermal conduction promoter 124 and the heat dissipation step 11 come into surface contact. In addition, the side portions 123 arranged at both sides of the cooling body 121 come into surface contact with the heat dissipation step 11. Accordingly, since the thermal contact area between the cooling body 121 and the case 10 increases, the heat dissipation performance may be improved as the thermal energy of the exhaust gas is transmitted to the case 10 through the cooling body 121.

The through-hole part 122 of the cooling plate 120 may be arranged in grid. The grid-shaped rib across the through-hole part 122 may stably support the ventilation filter 130 installed in the through-hole part 122. Accordingly, the ventilation filter 130 may be prevented from being deformed or damaged by the gas pressure.

The ventilation filter 130 includes a first ventilation filter 131 and a second ventilation filter 132.

The first ventilation filter 131 is arranged inner than the through-hole part 122, and the second ventilation filter 132 is arranged outer than the through-hole part 122. The first ventilation filter 131 and the second ventilation filter 132 have a size that may cover the entire through-hole part 122. Here, the pitch of the mesh of the second ventilation filter 132 may be slightly smaller than or the same as that of the mesh of the first ventilation filter 131. Accordingly, the exhaust gas may be first filtered by the first ventilation filter 131 and then filtered again by the second ventilation filter 132. In addition, the second ventilation filter 132 may filter dust particles that are relatively smaller than those of the first ventilation filter 131 or dust particles that are the same in size.

When the through-hole part 122 has a square shape, the first ventilation filter 131 and the second ventilation filter 132 may also have a square shape. The first ventilation filter 131 and second ventilation filter 132 may have various shapes depending on the shape of the through-hole part 122.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A ventilation device installed in a battery pack to filter an exhaust gas of the battery pack, the ventilation device comprising:
a cooling plate provided with through-hole part for the exhaust gas to pass through and dissipating heat of the exhaust gas;
a deflector spaced apart from the through-hole part in a direction opposite to a flowing direction of the exhaust gas to cover the through-hole part in the flowing direction; and
a ventilation filter installed at the through-hole part of the cooling plate to filter the exhaust gas passing through the through-hole part.

2. The ventilation device of claim 1, wherein the deflector comprises:
a deflection panel screening the through-hole part; and
a frame connecting the deflection panel and the cooling plate and providing a detour space between the deflection panel and the cooling plate.

3. The ventilation device of claim 2, wherein the deflection panel is arranged to face the through-hole part of the cooling plate.

4. The ventilation device of claim 2, wherein edges of the deflection panel and the cooling plate are spaced apart in the flowing direction.

5. The ventilation device of claim 2, wherein the frame comprises:
a front frame where the deflection panel is installed;
a plurality of connecting frames extending from the front frame toward the cooling plate and defining the detour space between the cooling plate and the deflection panel; and
a rear frame connected to the plurality of connecting frames and installed at the cooling plate to face the front frame.

6. The ventilation device of claim 1, wherein the cooling plate comprises:
a cooling body where the through-hole part is provided; and
a thermal conduction promoter having a periphery thinner than the cooling body.

7. The ventilation device of claim 1, wherein the through-hole part of the cooling plate are arranged in grid.

8. The ventilation device of claim 6, wherein the ventilation filter comprises:
a first ventilation filter arranged inner than the through-hole part in the flowing direction; and
a second ventilation filter arranged outer than the through-hole part in the flowing direction.

9. The ventilation device of claim 1, wherein the deflector, the ventilation filter and the cooling plate are arranged to be aligned with one another along the flowing direction.

10. A battery package comprising:
one or more battery modules disposed inside a case;
at least one inner filter arranged to screen an exterior of the battery module to primarily filter an exhaust gas generated during an ignition of the one or more battery modules; and
a ventilation device deflecting the exhaust gas filtered by the at least one inner filter and including a mesh secondarily filtering dust of a flammable size in the exhaust gas filtered by the at least one inner filter.

11. The battery package of claim 10, wherein the ventilation device comprises:
a deflector facing the at least one inner filter and deflecting the exhaust gas to change a direction of travel of the exhaust gas;
a cooling plate provided with a through-hole part where the exhaust gas to pass through and dissipating heat of the exhaust gas; and
a ventilation filter installed at the through-hole part of the cooling plate to filter the exhaust gas deflected by the deflector.

12. The battery package of claim 11, wherein the one or more inner filter is disposed at each of two widthwise ends of the one or more battery modules, and
the ventilation device is coupled to both sides of the case opposite to the one or more inner filter.

13. The battery package of claim 12, wherein two or more ventilation devices are installed at each side of the case.

14. The battery package of claim 11, wherein the deflector comprises:
a deflection panel installed between the one or more inner filter and the cooling plate to deflect the exhaust gas; and
a frame connecting the deflection panel and the cooling plate and defining a detour space between the deflection panel and the cooling plate.

15. The battery package of claim 14, wherein the deflection panel is arranged to face the through-hole part of the cooling plate.

16. The battery package of claim 14, wherein the deflection panel deflects the exhaust gas toward a periphery of the frame.

17. The battery package of claim 14, wherein the frame comprises:
a front frame where the deflection panel is installed;
a plurality of connecting frames extending from the front frame toward the cooling plate and defining the detour space between the cooling plate and the deflection panel; and
a rear frame connected to the plurality of connecting frames and installed at the cooling plate to face the front frame.

18. The battery package of claim 11, wherein the cooling plate comprises:
a cooling body where the through-hole part is provided; and
a thermal conduction promoter provided at and thinner than a periphery of the cooling body and coupled to and in surface contact with the case.

19. The battery package of claim 18, wherein the through-hole part of the cooling plate are arranged in grid.

20. The battery package of claim 11, wherein the ventilation filter comprises:
a first ventilation filter arranged inner than the through-hole part in a flowing direction; and
a second ventilation filter arranged outer than the through-hole part in the flowing direction.

21. The battery package of claim 11, wherein the deflector, the ventilation filter and the cooling plate are arranged in a straight line.
